# FASCICULE DE BREVET EUROPEEN

(11) **EP 3 069 936 B1**
(45) Date de publication et mention de la délivrance du brevet: **22.11.2017**
(21) Numéro de dépôt: 16305090.9
(22) Date de dépôt: 29.01.2016
(51) Int. Cl.: B60R 3/00, B60R 19/48

(54) **DISPOSITIF FORMANT MARCHEPIED D'UN VÉHICULE AUTOMOBILE**
VORRICHTUNG, DIE EINE TRITTSTUFE EINES KRAFTFAHRZEUGS BILDET
DEVICE FORMING A STEP OF A MOTOR VEHICLE

(30) Priorité: 16.03.2015 FR 1552102
(43) Date de publication de la demande: 21.09.2016
(73) Titulaire: Renault S.A.S., 92100 Boulogne-Billancourt (FR)
(72) Inventeur: L'HER, Alain, 78310 MAUREPAS (FR)

(56) Documents cités:
- DE-A1- 3 826 542
- DE-U1- 29 900 510

## Description

### Domaine de l'invention :

La présente invention concerne un dispositif formant marchepied comprenant un élément de carrosserie, notamment un bouclier d'un véhicule automobile, une cavité ménagée dans l'élément de carrosserie délimitée par une paroi inférieure formant une surface d'appui pour une partie antérieure du pied d'un utilisateur.

### Etat de la technique :

Un véhicule automobile de type fourgonnette ou utilitaire comprend classiquement des marchepieds disposés de chaque côté, chaque marchepied comportant une cavité ménagée dans le bouclier avant, afin de permettre à un utilisateur de s'élever vers le pare-brise pour enlever le givre ou de la neige accumulée sur celui-ci. Le marchepied doit à cet effet présenter une rigidité suffisante pour supporter le poids d'un utilisateur. D'un autre côté, le bouclier doit également satisfaire la réglementation « ECE127 » applicable au choc piéton, notamment le « choc tibia ». Cette réglementation suppose que le bouclier présente une zone de contact suffisamment molle pour se déformer et absorber localement le choc au contact d'une jambe. Les marchepieds doivent donc satisfaire des besoins antagonistes. Le document DE 10 2013 007 379 A1 révèle un marchepied selon le préambule de la revendication 1.

### But de l'invention :

L'invention a pour but de pallier tout ou partie des inconvénients précédents en proposant un dispositif de marchepied satisfaisant autant la fonction de rigidité attendue pour supporter le poids complet d'une personne, que le besoin de souplesse nécessaire du bouclier en cas de choc.

### Objet de l'invention :

A cet effet, l'invention a pour objet un dispositif formant marchepied selon la définition de la revendication 1. Selon d'autres caractéristiques avantageuses de l'invention :
- le plateau mobile est articulé autour d'un axe de rotation sensiblement vertical porté par un élément de structure du véhicule, notamment une zone avant d'un longeron du véhicule ou une traverse avant du véhicule,
- le plateau mobile est orienté de façon sensiblement horizontale et est supporté par une paroi arrière sensiblement verticale reliée à l'axe de rotation,
- des moyens de rappel sont disposés sur l'axe de rotation et sont conformés pour ramener le plateau mobile dans la position déployée,
- des moyens de butée sont prévus pour limiter le déplacement du plateau mobile dans la position déployée,
- le plateau mobile est disposé en dessous de la paroi inférieure de la cavité, à une distance comprise entre 0,5 et 5 mm,
- le plateau mobile dans la position déployée est avancé en direction de l'élément de carrosserie sur une longueur au moins égale à la moitié de la profondeur de la cavité, mesurée longitudinalement dans une zone centrale de la cavité,
L'invention a également pour objet un véhicule automobile comprenant un dispositif formant marchepied ayant tout ou partie des revendications précédentes.

### Exposé de l'invention :

L'invention sera mieux comprise à la lecture de la description suivante d'un exemple non limitatif de l'invention, et à la lumière des dessins annexés sur lesquels :
- la figure 1 représente une vue de côté d'un dispositif formant marchepied selon l'invention,
- la figure 2 représente une vue de dessus du dispositif de la figure 1,
- la figure 3 est une vue en perspective depuis l'intérieur de l'élément de carrosserie, du dispositif de la figure 1,
- la figure 4 est une vue de l'arrière vers l'avant du dispositif formant marchepied de la figure 1,
- les figures 5 et 6 sont des vues de dessus du dispositif de la figure 1 représentant le plateau mobile respectivement dans la position déployée et dans la position escamotée, et
- la figure 7 représente une vue éclatée d'une partie mobile du dispositif formant marchepied de la figure 1 illustrant le plateau articulé sur son axe de rotation.

Pour les besoins de la description, les directions et orientations sont indiquées en référence au repère XYZ classiquement utilisé en conception automobile, dans lequel X est la direction longitudinale avant-arrière du véhicule, dirigé vers l'arrière, Y est la direction transversale au véhicule, dirigé vers la droite et Z la direction verticale dirigée vers le haut.
Les notions avant-arrière s'entendent par rapport au sens de marche normal du véhicule qui est dirigé vers l'avant.
Le terme « sensiblement » indique qu'un léger écart est admis par rapport à une position ou disposition nominale déterminée, tout en restant inclus dans le cadre de l'invention. Par exemple « sensiblement vertical » indique qu'un écart de l'ordre de 10° par rapport à une orientation strictement verticale est admis dans le cadre de l'invention.

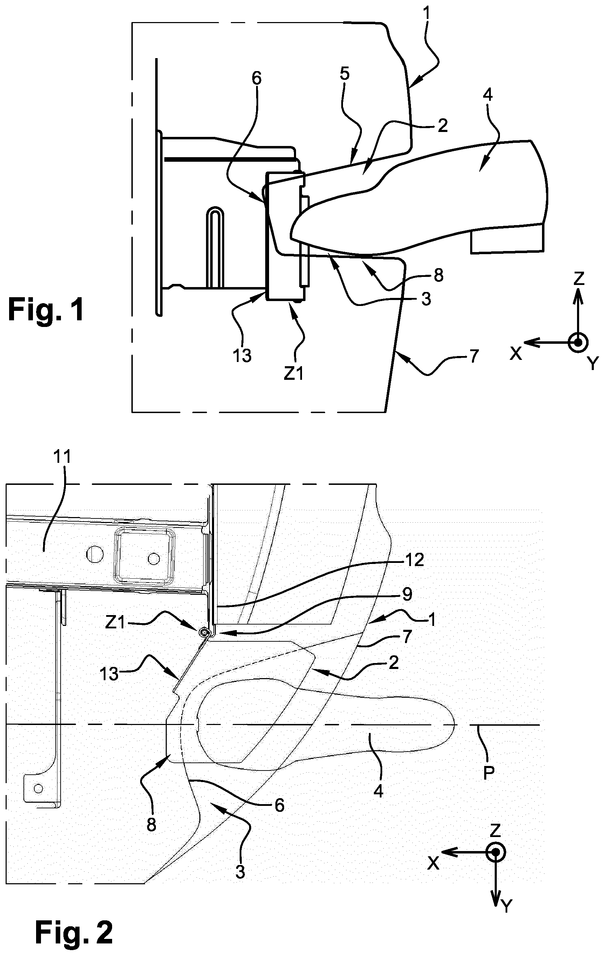

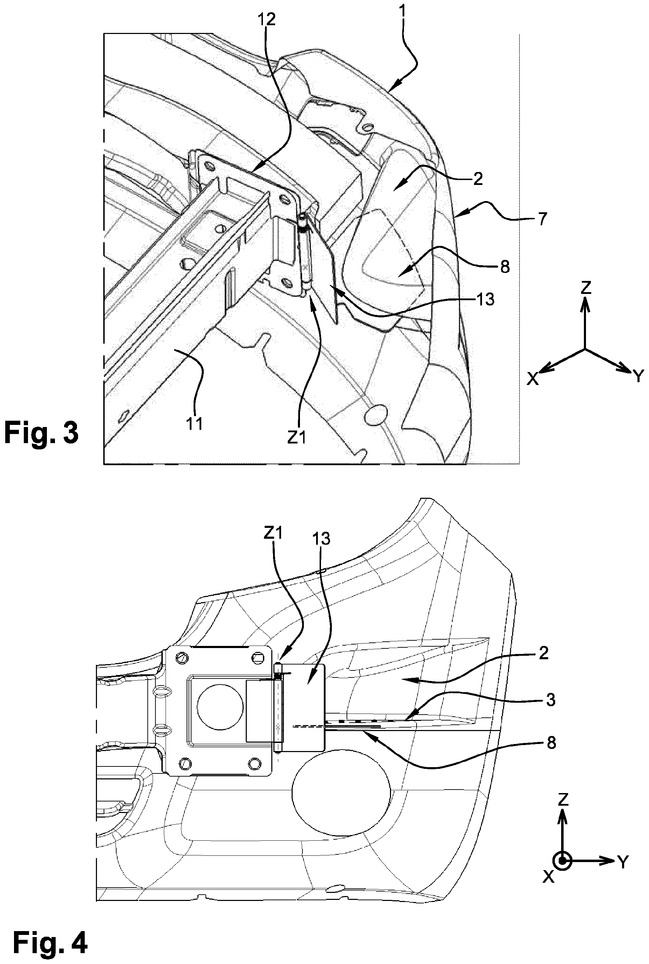

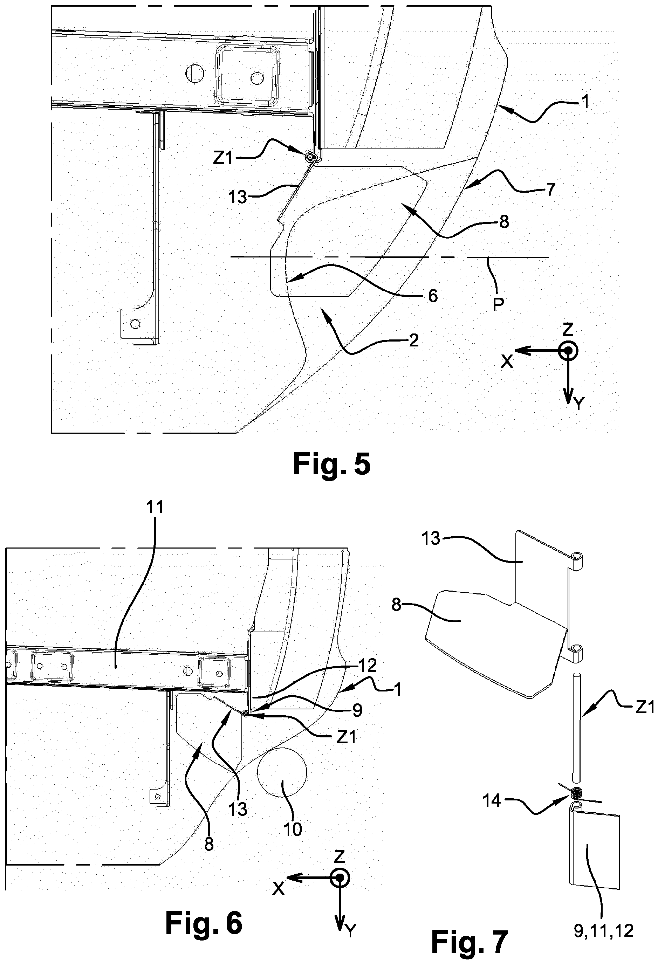

On a représenté aux figures 1 et 2 un dispositif formant marchepied selon l'invention, vu respectivement de côté et de dessus. Ce dispositif comprend un élément de carrosserie 1 d'un véhicule automobile, typiquement un bouclier avant du véhicule. Cet élément de carrosserie 1 comprend une cavité 2 délimitée par une paroi inférieure 3 orientée de façon sensiblement horizontale formant une surface d'appui pour une partie antérieure du pied 4 d'un utilisateur. La cavité 2 est par ailleurs délimitée par une paroi supérieure 5 et par une paroi de fond 6 fermant l'intérieur de la cavité 2 et assurant une jonction de la paroi inférieure 3 et de la paroi supérieure 5 avec une surface frontale extérieure 7 de l'élément de carrosserie 1. La paroi de fond 6 a en vue de dessus la forme d'une cuvette dont les bords sont raccordés à la surface frontale extérieure 7, laquelle est typiquement orientée de façon sensiblement verticale aux abords de la cavité 2. Selon l'invention, le dispositif formant marchepied comprend un plateau mobile 8 articulé sur un élément de structure 9 du véhicule, entre une position déployée en dessous de la paroi inférieure 3 en direction de l'élément de carrosserie 1 (visible aux figure 1-5), et une position escamotée à l'opposé de l'élément de carrosserie 1 (telle que visible à la figure 6). Autrement dit, la position déployée est située à une position avancée par rapport à la position escamotée, qui est située plus en retrait vers l'arrière du véhicule. Le déplacement du plateau mobile 8 vers la position escamotée est réalisé sous la contrainte de l'élément de carrosserie 1 subissant localement une déformation consécutive à un choc, typiquement un choc piéton dans lequel la jambe d'un piéton 10, représentée schématiquement par un cercle à la figure 6, est heurtée par l'élément de carrosserie 1. Ce choc entraîne une déformation locale de l'élément de carrosserie 1, c'est-à-dire du bouclier, afin d'absorber / dissiper l'énergie du choc et de limiter en conséquence les blessures du piéton.
Le plateau mobile 8 est articulé autour d'un axe de rotation Z1 sensiblement vertical porté par un élément de structure 9 du véhicule. Cet élément de structure 9 est typiquement constitué par une zone avant d'un longeron 11 du véhicule ou par une extrémité d'une traverse avant 12 du véhicule. Comme on le voit aux figures 2 et 3, la traverse avant 12 qui s'étend essentiellement suivant la direction transversale Y du véhicule se raccorde à ses extrémités latérales aux extrémités avant de longerons 11 du véhicules, les longerons 11 constituant des éléments de structure qui sont orientés sensiblement suivant la direction longitudinale X du véhicule. L'axe de rotation Z1 du plateau mobile 8 est de ce fait situé du côté intérieur du véhicule, c'est-à-dire du côté du plan vertical longitudinal médian du véhicule.
Le plateau mobile 8 est orienté de façon sensiblement horizontale et est supporté par une paroi arrière 13 sensiblement verticale reliée à l'axe de rotation Z1.
Le plateau mobile 8 et la paroi arrière 13 sont typiquement constitués d'éléments issus de tôlerie assemblés-soudés ou conformés par pliage à partir d'une unique pièce métallique pour obtenir la forme générale d'une équerre. Des conformations de rigidifications (non représentées), telle que des zones localement déformées par emboutissage peuvent être prévues dans la zone de pliage ou dans d'autres zones du plateau 8 ou de la paroi arrière 13.
A titre d'exemple non limitatif, le plateau mobile 8 et la paroi arrière 13 ont une épaisseur de l'ordre de 2,5 mm.
La paroi arrière 13 assure la fonction de support du plateau mobile 8 et est reliée à l'élément de structure 9 par une articulation représentée en éclaté à la figure 7. L'axe de rotation Z1 est matérialisé par un axe cylindrique dont le diamètre est de l'ordre de 8 mm à titre d'exemple non limitatif. Cet axe cylindrique traverse l'élément de structure 9 dans une zone médiane de l'articulation, considéré verticalement, ainsi que la paroi arrière 13 dans des zones haute et basse de l'articulation, bordant verticalement l'élément de structure 9.
Le plateau mobile 8 est conformé pour résister à une charge verticale de 120kg appliquée suivant la direction verticale Z.
Selon un aspect de l'invention visible à la figure 7, des moyens de rappel 14 sont disposés sur l'axe de rotation Z1 et sont conformés pour ramener par défaut le plateau mobile 8 dans la position déployée en direction de l'élément de carrosserie 1. « Par défaut » s'entend « naturellement », c'est-à-dire en l'absence de contrainte opposée appliqué sur le plateau mobile 8.

On note encore que des moyens de butée (non représentés) sont prévus pour limiter le déplacement du plateau mobile 8 dans la position déployée.
Quelle que soit sa position angulaire autour de l'axe de rotation Z1, le plateau mobile 8 demeure en dessous de la paroi inférieure 3 de la cavité 2, à une distance comprise entre 0,5 et 5 mm, qui permet un montage du plateau mobile 8 sur l'élément de structure 9, 11, 12 sans conflit avec l'élément de carrosserie 1 et constitue un jeu suffisant pour permettre un déplacement du plateau mobile 8 sans obstacle.
En référence aux figures 2 et 5 qui illustrent le plateau mobile 8 dans la position déployée, on observe que le plateau mobile 8 est avancée en direction de l'élément de carrosserie 1 sur une longueur au moins égale à la moitié de la profondeur de la cavité 2, mesurée longitudinalement dans une zone centrale de la cavité 2, qui est alignée avec un plan fictif P correspondant sensiblement au plan médian longitudinal du pied d'une personne s'engageant dans la cavité 2. Ce plan est parallèle à la direction longitudinale X du véhicule. Dans l'exemple de réalisation illustré, le plateau mobile 8 est avancé en direction de l'élément de carrosserie 1 sur une longueur sensiblement égale aux deux tiers de la profondeur de la cavité 2 mesurée le long du plan fictif P. Lorsqu'un utilisateur engage son pied dans la cavité et s'appuie sur la surface inférieure 3 pour s'élever et atteindre par exemple le pare-brise du véhicule, la paroi inférieure 3 se déforme localement vers le bas sous l'effort dû au poids de l'utilisateur, jusqu'à ce qu'elle vienne coopérer en contact avec le plateau mobile 8 disposé sous celle-ci en position déployée. La déformation de la surface inférieure 3 de la cavité 2 est de l'ordre de quelques millimètres et correspond à l'espace fonctionnel ménagé au-dessus du plateau mobile 8 pour autoriser son montage et son pivotement en cas de choc piéton.

Bien entendu, l'invention n'est pas limitée aux modes ou variantes de réalisation décrits précédemment et comprends tous les équivalents techniques de ces moyens.

## Revendications

1. Dispositif formant marchepied comprenant un élément de carrosserie (1) d'un véhicule automobile, une cavité (2) ménagée dans l'élément de carrosserie (1) délimitée par une paroi inférieure (3) formant une surface d'appui pour une partie antérieure du pied (4) d'un utilisateur, **caractérisé en ce que** la cavité (2) est en outre délimitée par une paroi supérieure (5) et par une paroi de fond (6) fermant un intérieur de la cavité (2) et **en ce que** le dispositif comprend un plateau mobile (8) articulé sur un élément de structure (9, 11, 12) du véhicule, entre une position déployée en dessous de la paroi inférieure (3) en direction de l'élément de carrosserie (1), et une position escamotée à l'opposé de l'élément de carrosserie (1), le déplacement du plateau mobile (8) vers la position escamotée étant réalisé sous la contrainte de l'élément de carrosserie (1) subissant une déformation consécutive à un choc.

2. Dispositif selon la revendication 1, **caractérisé en ce que** le plateau mobile (8) est articulé autour d'un axe de rotation (Z1) sensiblement vertical porté par un élément de structure (9, 11, 12) du véhicule, notamment une zone avant d'un longeron (11) du véhicule ou une traverse avant (12) du véhicule.

3. Dispositif selon la revendication 2, **caractérisé en ce que** le plateau mobile (8) est orienté de façon sensiblement horizontale et est supporté par une paroi arrière (13) sensiblement verticale reliée à l'axe de rotation (Z1).

4. Dispositif selon la revendication 2 ou 3, **caractérisé en ce que** des moyens de rappel (14) sont disposés sur l'axe de rotation (Z1) et sont conformés pour ramener le plateau mobile (8) dans la position déployée.

5. Dispositif selon la revendication 4, **caractérisé en ce que** des moyens de butée sont prévus pour limiter le déplacement du plateau mobile (8) dans la position déployée.

6. Dispositif selon l'une quelconque des revendications 3 à 5, **caractérisé en ce que** le plateau mobile (8) est disposé en dessous de la paroi inférieure (3) de la cavité (2), à une distance comprise entre 0,5 et 5 mm.

7. Dispositif selon l'une quelconque des revendications précédentes, **caractérisé en ce que** le plateau mobile (8) dans la position déployée est avancée en direction de l'élément de carrosserie (1) sur une longueur au moins égale à la moitié de la profondeur de la cavité (2), mesurée longitudinalement dans une zone centrale de la cavité (2).

8. Véhicule automobile **caractérisé en ce qu'**il comprend un dispositif selon l'une quelconque des revendications précédentes.

## Patentansprüche

1. Vorrichtung, die eine Trittstufe bildet, die ein Karosserieelement (1) eines Kraftfahrzeugs enthält, wobei ein im Karosserieelement (1) ausgebildeter Hohlraum (2), der von einer unteren Wand (3) begrenzt wird, eine Auflagefläche für einen vorderen Teil des Fußes (4) eines Benutzers bildet, **dadurch gekennzeichnet, dass** der Hohlraum (2) außerdem von einer oberen Wand (5) und von einer Rückwand (6) begrenzt wird, die einen Innenraum des Hohlraums (2) verschließen, und dass die Vorrichtung eine gelenkig mit einem Strukturelement (9, 11, 12) des Fahrzeugs verbundene Platte (8) enthält, die zwischen einer ausgeklappten Stellung unter der unteren Wand (3) in Richtung des Karosserieelements (1) und einer eingeklappten Stellung entgegengesetzt zum Karosserieelement (1) beweglich ist, wobei die Verschiebung der beweglichen Platte (8) in die eingeklappte Stellung unter der Belastung des Karosserieelements (1) durchgeführt wird, das nach einem Aufprall eine Verformung erfährt.

2. Vorrichtung nach Anspruch 1, **dadurch gekennzeichnet, dass** die bewegliche Platte (8) um eine im Wesentlichen senkrechte Drehachse (Z1) angelenkt ist, die von einem Strukturelement (9, 11, 12) des Fahrzeugs getragen wird, insbesondere einem vorderen Bereich eines Längsträgers (11) des Fahrzeugs oder einem vorderen Querträger (12) des Fahrzeugs.

3. Vorrichtung nach Anspruch 2, **dadurch gekennzeichnet, dass** die bewegliche Platte (8) im Wesentlichen waagrecht ausgerichtet ist und von einer im Wesentlichen senkrechten hinteren Wand (13) gestützt wird, die mit der Drehachse (Z1) verbunden ist.

4. Vorrichtung nach Anspruch 2 oder 3, **dadurch gekennzeichnet, dass** Rückstelleinrichtungen (14) auf der Drehachse (Z1) angeordnet und gestaltet sind, um die bewegliche Platte (8) in die ausgeklappte Stellung zurückzuholen.

5. Vorrichtung nach Anspruch 4, **dadurch gekennzeichnet, dass** Anschlageinrichtungen vorgesehen sind, um die Verschiebung der beweglichen Platte (8) in die ausgeklappte Stellung zu begrenzen.

6. Vorrichtung nach einem der Ansprüche 3 bis 5, **dadurch gekennzeichnet, dass** die bewegliche Platte (8) unter der unteren Wand (3) des Hohlraums (2) in einem Abstand zwischen 0,5 und 5 mm angeordnet ist.

7. Vorrichtung nach einem der vorhergehenden Ansprüche, **dadurch gekennzeichnet, dass** die bewegliche Platte (8) in der ausgeklappten Stellung in Richtung des Karosserieelements (1) über eine Länge vorgeschoben wird, die mindestens gleich der Hälfte der Tiefe des Hohlraums (2) ist, gemessen in Längsrichtung in einer zentralen Zone des Hohlraums (2).

8. Kraftfahrzeug, **dadurch gekennzeichnet, dass** es eine Vorrichtung nach einem der vorhergehenden Ansprüche enthält.

## Claims

1. Step-forming device comprising a body element (1) of a motor vehicle, a cavity (2) formed in the body element (1) and delimited by a lower wall (3) forming a bearing surface for a front part of the foot (4) of a user, **characterized in that** the cavity (2) is additionally delimited by an upper wall (5) and by an end wall (6) closing an interior of the cavity (2), and **in that** the device comprises a movable plate (8) articulated on a structural element (9, 11, 12) of the vehicle, between a deployed position in which it is deployed below the lower wall (3) in the direction of the body element (1), and a retracted position in which it is retracted away from the body element (1), the movement of the movable plate (8) towards the retracted position being produced under the stress of the body element (1) being subjected to a deformation following an impact.

2. Device according to Claim 1, **characterized in that** the movable plate (8) is articulated about a substantially vertical axis of rotation (Z1) borne by a structural element (9, 11, 12) of the vehicle, in particular a front region of a longitudinal member (11) of the vehicle or a front crossmember (12) of the vehicle.

3. Device according to Claim 2, **characterized in that** the movable plate (8) is oriented substantially horizontally and is supported by a substantially vertical rear wall (13) connected to the axis of rotation (Z1).

4. Device according to Claim 2 or 3, **characterized in that** return means (14) are arranged on the axis of rotation (Z1) and are configured to return the movable plate (8) into the deployed position.

5. Device according to Claim 4, **characterized in that** stop means are provided to limit the movement of the movable plate (8) in the deployed position.

6. Device according to any one of Claims 3 to 5, **characterized in that** the movable plate (8) is arranged below the lower wall (3) of the cavity (2), at a distance of between 0.5 and 5 mm.

7. Device according to any one of the preceding claims, **characterized in that** the movable plate (8) in the deployed position is advanced in the direction of the body element (1) over a length at least equal to half the depth of the cavity (2), measured longitudinally in a central area of the cavity (2).

8. Motor vehicle, **characterized in that** it comprises a device according to any one of the preceding claims.
